# EUROPEAN PATENT SPECIFICATION

(11) **EP 3 384 186 B1**
(45) Date of publication and mention of the grant of the patent: **03.06.2020**
(21) Application number: 16805968.1
(22) Date of filing: 30.11.2016
(51) Int. Cl.: F16J 15/34

(54) **STATIC SHAFT SEALING**
WELLENDICHTUNG
JOINT D'ÉTANCHÉITÉ D'ARBRE

(30) Priority: 30.11.2015 EP 15197056
(43) Date of publication of application: 10.10.2018
(73) Proprietor: Wärtsilä Svanehøj A/S, 9230 Svenstrup J (DK)
(72) Inventor: HALKJÆR, Lau, 9230 Svenstrup J (DK)
(74) Representative: Plougmann Vingtoft a/s
(86) International application number: PCT/DK2016/050404
(87) International publication number: WO 2017/092767

(56) References cited:
- EP-A2- 0 105 616
- GB-A- 861 557
- US-A- 3 708 177

## Description

### FIELD OF THE INVENTION

The present invention relates to a seal for a rotational shaft extending inside the tubular member. The seal preferably comprising
- a tubular member,
- a division element dividing the interior of the tubular member in an upper section and a lower section,
- a shaft extending from a position in the upper section of the tubular member through a through-going opening in the division element and into the lower section;
- a first element sealingly arranged in a fixed position on the shaft in the upper section and having a first sealing surface encircling the shaft and facing towards the internal division element,
- a second element slidingly arranged on the shaft below the first element, the second element having a second sealing surface facing towards the first sealing surface, the second element has a section extending through the through going opening and a seal element is provided in-between said section and the through going opening,
- an actuator for sliding the second element along the shaft.

### BACKGROUND OF THE INVENTION

Stopping gas or liquid from flowing along a shaft into a chamber is often a delicate problem. This is for example the case when bearings for the shaft of a LNG pump needs to be serviced, exchanged, etc. Therefore a shaft sealing design is to cut off the flow of the medium, thus preventing it to spill out to the surroundings, during a disassembly.

An existing solution is to have a rotary sealing arrangement, but the shortcoming of this is the limited life expectancy of such sealing solution where the wear will wreck the sealing thus rendering it obsolete.

Hence, an improved sealing mechanism would be advantageous, and in particular a more efficient and/or reliable sealing mechanism would be advantageous.

GB 861557A discloses a sealing-mean for a shaft of a turbo-compressor or other machines. The sealing-mean comprises a sealing chamber to which a sealing medium, for example oil, is supplied at a pressure higher than that in the interior space of the machine casing, a collecting-chamber between the sealing-chamber and the space, a mechanical seal between the sealing and collecting chambers and an axially movable non- rotatable bush, urged by spring means into contact with a collar on the shaft, and a clearance type seal between the sealing chamber and the atmosphere. The sealing oil is supplied by a pump from a tank to the chamber and returned via a pressure-regulator connected by a pipe to the chamber and ensuring that the pressure in the chamber always exceeds that in chamber, preferably by a small amount only. A labyrinth seal is interposed between the chamber and the space. The bush is a sliding fit in a flange of a bush in the casing, is prevented from rotation by a pin, and has a graphite rubbing ring. Any oil leaking into the chamber is drained via a float-controlled valve in a tank to the tank. The clearance type seal between the chamber and the atmosphere comprises three spring-loaded metal packing-rings secured against rotation by pins and axially slidable with a small clearance on a sleeve secured to the shaft.

In GB 861557A the actuator for sliding the bush is a spring biasing the bush into a closing so that the sealing is provided during rotation of the shaft.

### OBJECT OF THE INVENTION

An object of the present invention is to provide an alternative to the prior art.

In particular, it may be seen as a further object of the present invention to provide a sealing mechanism that solves the above mentioned problems of the prior art with respect to limited life expectancy.

### SUMMARY OF THE INVENTION

The invention relates, in a first aspect, to a seal for a rotational shaft extending inside the tubular member, such as in a caission for housing a pump in a container, such as a fuel tank.

The seal preferably comprises:
- a tubular member;
- a division element dividing the interior of the tubular member in an upper section and a lower section;
- a shaft extending from a position in the upper section of the tubular member through a through-going opening in the division element and into the lower section;
- a first element sealingly arranged in a fixed position on the shaft in the upper section and having a first sealing surface encircling the shaft and facing towards the internal division element;
- a second element slidingly arranged on the shaft below the first element. The second element may have a second sealing surface facing towards the first sealing surface. The second element may also have a section extending through the through going opening and a seal element provided in-between said section and the through going opening;
- an actuator for sliding the second element along the shaft;

The seal may also comprise a seal element arranged in between the first and second sealing surface(s).

As presented herein, maintainance often requires that a seal is provided so as at allow maintance of constructural elements such as bearings arranged above the seal. Thus, in accordance with preferred embodiment, the present inventive seal makes it possible to provide such a maintance by stopping rotation of the shaft and activating the sealing, which is in-active during normal operation of the pump.

By sealingly arranged is preferably meant that the an element is arranged in a manner providing a fluid tight seal.

Preferably, the seal also comprises a casing arranged in the upper section. The casing may enclose the section of the second element, extending above the division element and above the first sealing surface, thereby enclosing a lower section of the first element. The casing is preferably at one end sealingly arranged on the division element and comprises at an opposite end an opening through which the shaft extends.

Preferably, the second element is slideable arranged on the shaft by comprising a cylindrical bore through which the shaft extends. The diameter of the cylindrical bore is preferably larger than the external dimension(s) of the shaft to provide a clearance in between bore and the shaft.

In addition embodiments according to the present invention comprise an actuator, such as a solenoid, pneumatic and/or hydraulic actuator, arranged to slide the second element along the shaft.

Preferably, a casing according to the present invention, may comprise a skirt extending into the through going opening and a seal element provided in-between the section of the second element extending into the through going opening. The through going opening is preferably arranged in-between skirt and the section of the second element extending into the through going opening.

Preferably, an embodiment according to the present invention may comprise a spring arranged to bias the second elements towards the division element.

Preferably, the biasing of the second element towards the division element may provide distance between a first sealing surface and a second sealing surface.

Preferably, a fluid or gas connection may extend through the casing and to a position below the second element and above the division element.

Preferably, an embodiment according to the present invention, may comprise an outlet tube arranged below the second element and being in fluid communication with interior of the tubular element, thereby allowing the fluid to flow through the tubular element and out through the outlet tube.

Preferably, the division element and the first element may be static elements, and the second element may be a dynamic element that move between
- an open position providing a distance between the first sealing surface and the second sealing surface
   and a
- closing position towards the first element providing a seal between the first element and the second element.

Preferably a seal according to the preferred embodiments of the invention may further comprise one or more resilient members, such as a spring, which biases the second element towards its opening position, so that the second element being in an opening position unless a force is applied to the second element to move it towards its closing position.

Preferably, the second element may be stationary and not rotating with the shaft when the second element is in its open position, where a distance between the first sealing surface and the second sealing surface is present, and the first element may be rotating with the shaft.

Preferably, the second element may be slideable arranged on the shaft by comprising a cylindrical bore through which the shaft extends, the diameter of the cylindrical bore may preferably be larger than the external dimension(s) of the shaft to provide a clearance in between the bore and the shaft.

Preferably, an actuator may be arranged to during non-rotation of the shaft slide the second element upwardly along the shaft to a closing position, where a sealing between the first element and the second element is provided, and downwardly during rotation of the shaft.

In another aspect of the invention, the invention relates to a fuel tank comprising a seal according to the present invention.

The novel concept of the present invention preferably comprises an arrangement which is comprised of a single acting spring return piston-cylinder where an open flange sealing groove is made in the piston and the activated piston end-stop functions as one of the walls of the sealing groove. If for some reason a cut off of the flow into the chamber is wanted the piston is activated thereby completing the sealing groove and shutting the chamber. A static shaft sealing between the piston end-stop and the shaft ensures axial sealing while the now activated sealing ensures radial sealing. Herein "piston" and "second element" are used interchangeably.

In a non-activated piston state a clearance between the piston and shaft allows free flow between the chambers. Due to the same clearance the piston is stationary and not rotating with the shaft, but the piston end-stop is mounted on, and rotating with, the shaft.

Dynamic shaft seals encloses the piston chamber making the necessary pressure build-up in the cylinder actuation chamber possible when the piston is to be activated.

In the present context a number of terms are used in a manner being ordinary to a skilled person; however, some of these terms are elucidated below:
*Caisson* is preferably used to denote a submerged hollow element in a container, such as a fuel tank. The caission preferably houses a pump for pumping e.g. LNG gas from the tank to the motor consuming the gas.

*Static* is preferably used to denote an element of the present invention having a fixed position e.g. the first element is at a fixed position on the shaft and rotates with the shaft, the divisional element is in a fixed position relatively to the tubular member and does not rotate.

*Dynamic* is preferably used to denote an element of the present invention, which upon applying an external force will move to another position, e.g. the second element does, in general, not rotate with the shaft but can be shifted between two vertical positions.

### BRIEF DESCRIPTION OF THE FIGURES

The present invention and in particular preferred embodiments thereof will now be disclosed in greater details with reference to the accompanying figures. The figures show ways of implementing the present invention and are not to be construed as being limiting to other possible embodiments falling within the scope of the attached claim set.
Figure 1 is a schematically cross sectional view of a fuel tank with a seal according to preferred embodiment of the invention.
Figure 2 is a close-up schematically cross sectional view of the sealing shown in fig. 1.
Figure 3 is a schematically cross sectional view of a seal according to a second embodiment of the invention.
Figure 4 is a detailed cross sectional view of a seal according to a third embodiment of the invention.
Figure 5 illustrates further details of the seal shown in fig. 4.
Figure 6 illustrates a seal according the present invention. In the figure, a section is cut-away in order to illustrate the interior of the seal.

### DETAILED DESCRIPTION OF AN EMBODIMENT

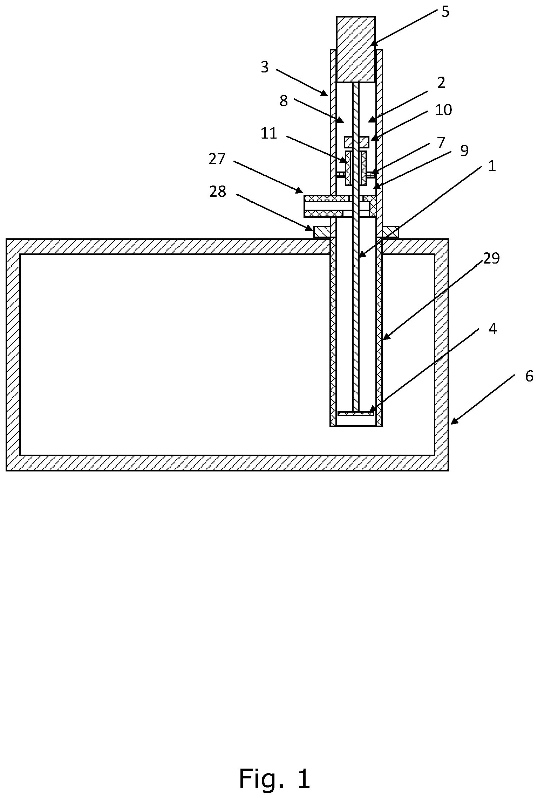

Reference is made to figure 1 illustrating a caisson 29 for housing a pump in a container 6. The container is typically a fuel tank 6 e.g. storing LNG on ship where the LNG is used as fuel for the motor of the ship and/or motors for auxiliary equipment of the ship. However, the container may be used for storing other items than fuel and may even be used for storing powdery substances.

As illustrated in figure 1, the fuel tank comprises a rotational shaft 1, extending inside a tubular member 3. A division element 7 is dividing the interior of the tubular member 3 in an upper section 8 and a lower section 9. The division element 7 is sealingly arranged in the interior of the tubular member 3. The rotational shaft 1 extends from a position in the upper section 8 of the tubular member 3 through a through-going opening 15 in the division element and into the lower section 9.

Upon rotation of the rotational shaft 1, the impeller 4 may suck - or pump - fluid from the interior of the tank through the tubular element 3 and deliver the fluid to the outside of the container through the outlet tube 27.

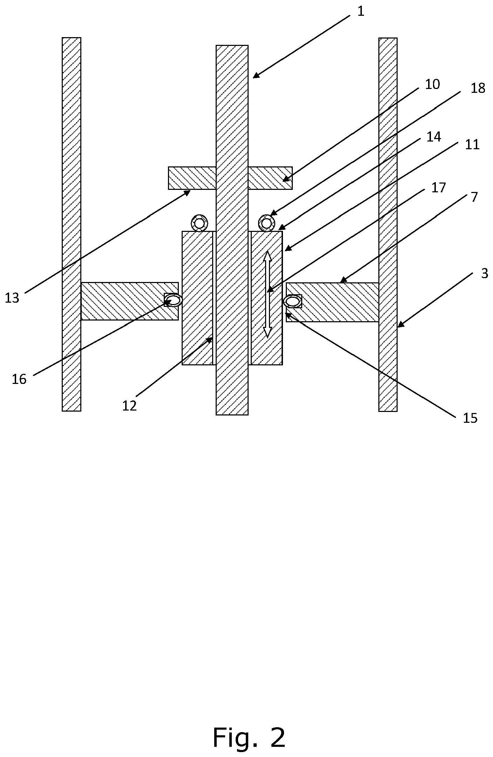

Figure 2 illustrates a close-up schematically cross sectional view of the sealing shown in figure 1.

Operation mode (the mode in which the impeller 4 pumps): Upon rotation of the rotational shaft 1, the impeller 4 may suck - or pump - fluid from the interior of the tank through the tubular element 3 and deliver the fluid to the outside of the container through the outlet tube 27. The fluid may also flow in the cylindrical bore 12 up towards the upper section 8 of tubular element 3.

In case of e.g. maintenance of the motor 5 e.g. the rotational shaft 1 is stationary, and an actuator 17 such as a solenoid, pneumatic and/or hydraulic actuator, is arranged to slide the second element 11 along the shaft against its closing position, towards the first element 10. A seal element 18, such as an O-ring, is provided on the second sealing surface 14, to provide a seal between 14 and 10, preventing the fluid from flowing towards the upper section 8 of tubular element 3. The embodiment also comprises a seal element 16, providing a seal between the division element 7 and the second element 11. The division element 7 and the first element 10 are static elements of the embodiment, while the second element 11 is dynamic and moves between a fully open position, as illustrated on figure 2, and a closing position. The division element 7 and the second element 11 does not rotate whereas the first element 10 does rotate with the shaft 1.

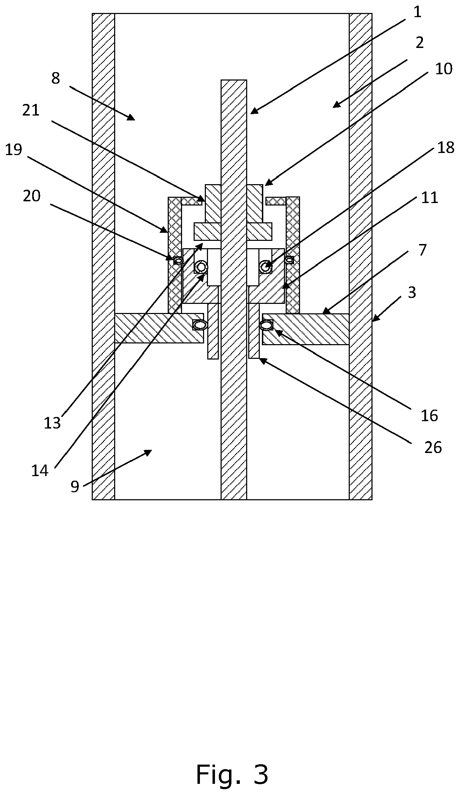

In figure 3 another embodiment of the sealing mechanism is disclosed.

The sealing mechanism comprises a rotational shaft 1, extending inside a tubular member 3. A division element 7 is dividing the interior of the tubular member 3 in an upper section 8 and a lower section 9. The rotational shaft 1 extends from a position in the upper section 8 of the tubular member 3 through a through-going opening 15 in the division element and into the lower section 9. A casing 19 arranged in the upper section 8, encloses the section of the second element 11 extending above the division element 7 and above the first sealing surface 13. The casing is at one end sealingly arranged on the division element 7 and comprising at an opposite end an opening 21 through which the shaft 1 extends. Operation mode (the mode in which the impeller 4 pumps): Upon rotation of the rotational shaft 1, the impeller 4 may suck - or pump - fluid from the interior of the tank through the tubular element 3 and deliver the fluid to the outside of the container through the outlet tube 27. The fluid may also flow in the cylindrical bore 12 up towards the upper section 8 of tubular element 3. That also implies that upon rotation of the rotational shaft 1, the second element 11 is in an open position, where a distance is provided between the first sealing surface 13 and the second sealing surface 14.

In case of e.g. maintenance of the motor 5 e.g. the rotational shaft 1 is stationary. An actuator 17 such as a solenoid, pneumatic and/or hydraulic actuator, is arranged to slide the second element 11 along the shaft against its closing position, during non-rotation of the shaft 1, towards the first element 10. A seal element 18, such as an O-ring, is provided on the second sealing surface 14, to provide a seal between 14 and 10, preventing the fluid from flowing towards the upper section 8 of tubular element 3. The embodiment also comprises a seal element 16, providing a seal between the division element 7 and the second element 11. The embodiment further comprises a seal element 20, to provide a seal between the casing 19 and the second element 11.

The division element 7, the casing 19 and the first element 10 are static elements of the embodiment, while the second element 11 is dynamic, and moves between a fully open position, as illustrated on figure 3, and a closing position

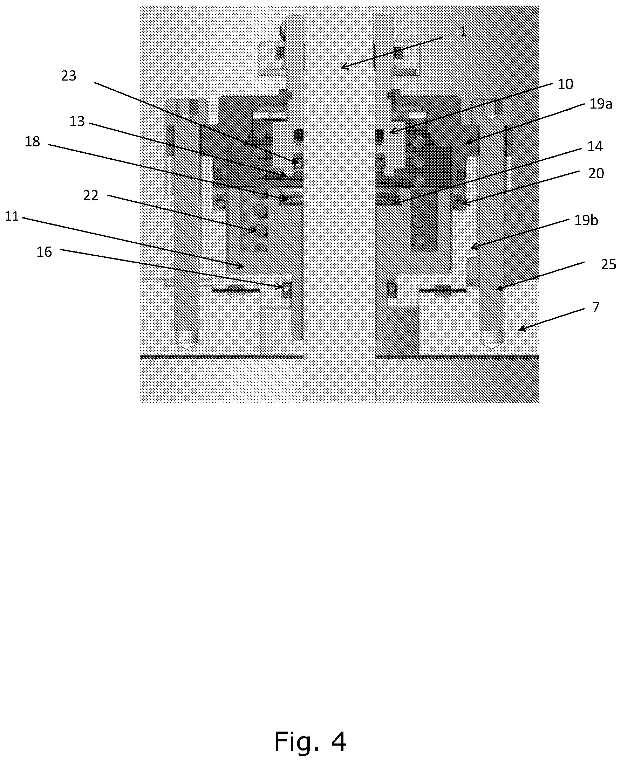

In figure 4 another embodiment of the sealing mechanism is disclosed.

The sealing mechanism comprises a rotational shaft 1, extending inside a tubular member 3. A division element 7 is dividing the interior of the tubular member 3 in an upper section 8 and a lower section 9. The rotational shaft 1 extends from a position in the upper section 8 of the tubular member 3 through a through-going opening 15 in the division element and into the lower section 9. A casing 19 arranged in the upper section 8, encloses the section of the second element 11 extending above the division element 7 and above the first sealing surface 13. The casing is at one end sealingly arranged on the division element 7 and comprising at an opposite end an opening 21 through which the shaft 1 extends. The embodiment further comprises one or more resilient members, such as a spring 22, which biases the second element 11 towards its opening position. The second element 11 can be seen as being "normally" open unless a force is applied to the second element 11 to move it towards its closing position.

Operation mode (the mode in which the impeller 4 pumps): Upon rotation of the rotational shaft 1, the impeller 4 may suck - or pump - fluid from the interior of the tank through the tubular element 3 and deliver the fluid to the outside of the container through the outlet tube 27. The fluid may also flow in the cylindrical bore 12 up towards the upper section 8 of tubular element 3.

In case of maintenance of the motor 5 e.g. the rotational shaft 1 is stationary, and an actuator 17 such as a solenoid, pneumatic and/or hydraulic actuator, is arranged to slide the second element 11 along the shaft against its closing position, towards the first element 10. A seal element 18, such as an O-ring, is provided on the second sealing surface 14, to provide a seal between 14 and 10, preventing the fluid from flowing towards the upper section of tubular element 8. The embodiment also comprises a seal element 16, providing a seal between the division element 7 and the second element 11. The embodiment further comprises a seal element 20, to provide a seal between the casing 19 and the second element 11. The casing 19 is separable, by means of bolts 25, and upon removal bolts 25, the casing can be separated into two elements, an upper and a lower element.

The division element 7, the casing 19 and the first element 10 are static elements of the embodiment, while the second element 11 is dynamic, and moves between a fully open position and a closing position.

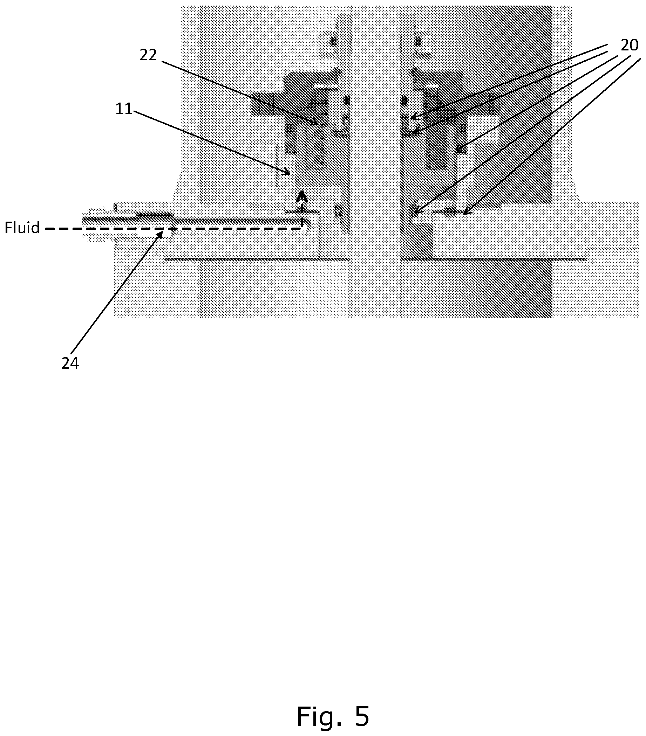

Figure 5 illustrates further details of the sealing mechanism shown in fig. 4

In case of e.g. maintenance of the motor 5 e.g. the rotational shaft 1 is stationary, and the fluid connection 24 supplies fluid to the second element 11, applying a force on the second element 11, moving it towards its closing position towards the first element 10. The flued may be supplied from a hydraulic pump, not illustrated on figure 5.

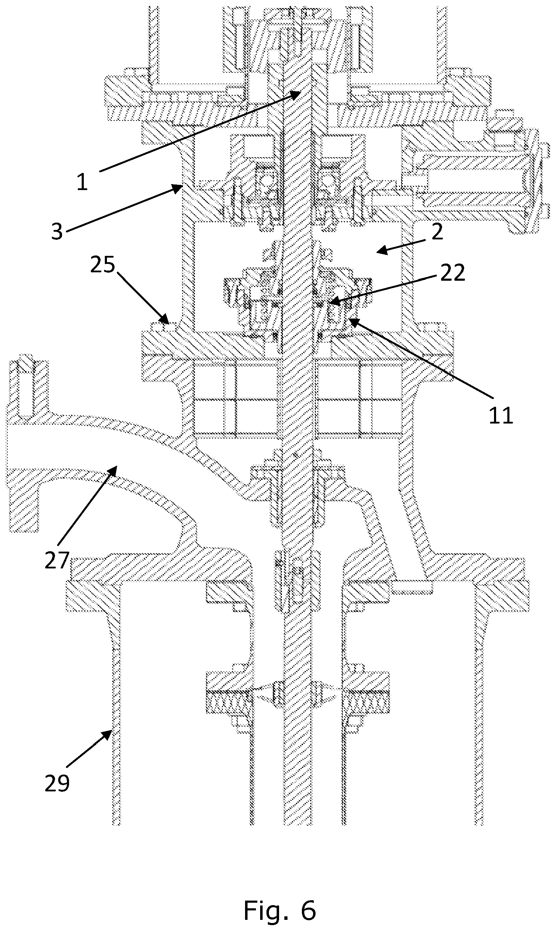

In figure 6 another embodiment of the sealing mechanism is disclosed.

Operation mode (the mode in which the impeller pumps): Upon rotation of the rotational shaft 1, the impeller may suck - or pump - fluid from the interior of the tank through the tubular element 3 and deliver the fluid to the outside of the container through the outlet tube 27. The fluid may also flow in the cylindrical bore up towards the upper section of tubular element 3.

In case of e.g. maintenance of the motor e.g. the rotational shaft 1 is stationary, and the fluid connection 24 supplies fluid, such as N₂, to the second element 11, applying a force on the second element 11, moving it towards its closing position towards the first element 10. The flued may be supplied from a hydraulic pump, not illustrated on figure 6. The pressure of the fluid delivered by the hydraulic pump, is preferably 5 bar higher than the pressure in the interior of the tank.

The embodiment further comprises one or more resilient members, such as a spring 22, which biases the second element 11 towards its opening position. The second element 11 can be seen as being "normally" open unless a force is applied to the second element 11 to move it towards its closing position.

Each element of the embodiment is represented with different shading than the adjacent element.

Although the present invention has been described in connection with the specified embodiments, it should not be construed as being in any way limited to the presented examples. The scope of the present invention is set out by the accompanying claim set.

### LIST OF REFERENCE NUMBERS USED

- 1: shaft
- 2: chamber
- 3: tubular member
- 4: impeller
- 5: motor
- 6: tank
- 7: division element
- 8: upper section (of tubular member)
- 9: lower section (of tubular member)
- 10: first element
- 11: second element
- 12: bore
- 13: first sealing surface
- 14: second sealing surface
- 15: through going opening
- 16: seal element
- 17: actuator
- 18: seal element
- 19: casing
- 19a: upper part of casing
- 19b: lower part of casing
- 20: seal element
- 21: opening
- 22: spring
- 23: seal element
- 24: fluid connection
- 25: bolt
- 26: skirt
- 27: outlet tube
- 28: flange
- 29: caisson

## Claims

1. A seal for sealing a rotational shaft (1) extending inside a tubular member (3), such as in a caission for housing a pump in a container, the seal comprising
- a tubular member (3),
- a division element (7) dividing the interior of the tubular member (3) in an upper section (8) and a lower section (9),
- a shaft (1) extending from a position in the upper section (8) of the tubular member (3) through a through-going opening (15) in the division element (7) and into the lower section (9);
- a first element (10) sealingly arranged in a fixed position on the shaft (1) in the upper section (8) and having a first sealing surface (13) encircling the shaft (1) and facing towards the internal division element (7),
- a second element (11) slidingly arranged on the shaft (1) below the first element (10), the second element having a second sealing surface (14) facing towards the first sealing surface (13), the second element has a section extending through the through going opening (15) and a seal element (16) is provided in-between said section and the through going opening (15),
- an actuator for sliding the second element (11) along the shaft (1),
**characterised in that** said actuator is a solenoid, pneumatic and/or hydraulic actuator arranged to slide the second element along the shaft (1).

2. A seal according to claim 1, further comprising a seal element (18) arranged in between the first and second sealing surface(s).

3. A seal according to claim 1 or 2, wherein a casing (19) arranged in the upper section (8),
- the casing (19) encloses the section of the second element (11) extending above the division element (7) and above the first sealing surface (13) thereby enclosing at least a lower section of the first element (10),
- the casing is at one end sealingly arranged on the division element (7) and comprising at an opposite end an opening (21) through which the shaft (1) extends.

4. A seal according to any of the preceding claims, wherein the second element (11) is slideable arranged on the shaft by comprising a cylindrical bore (12) through which the shaft (1) extends, the diameter of said cylindrical bore being larger that the external dimension(s) of the shaft to provide a clearance in between said bore (12) and the shaft (1).

5. A seal according to any of the claims 3-4, wherein the casing comprising a skirt (26) extending into the through going opening (15) and a seal element (16) provided in-between the section of the second element (11) extending into the through going opening (15) and the through going opening (15) is arranged in-between said skirt (26) and the section of the second element extending into the through going opening (15).

6. A seal according to any of the preceding claims, further comprising a spring (22) arranged to bias the second elements (11) towards the division element (7).

7. A seal according to according to claim 6, wherein the biasing of the second element (11) towards the division element (7) provides a distance between a first sealing surface (13) and a second sealing surface (14).

8. A seal according to any of the preceding claims 3-7, further comprising a fluid or gas connection (24) extending through the casing (19) and to a position below the second element (11) and above the division element (7).

9. A seal according to any of the preceding claims, further comprising an outlet tube (27) arranged below the second element (11) and being in fluid communication with interior of the tubular element, thereby allowing the fluid to flow through the tubular element and out through the outlet tube (27).

10. A seal according to any of the preceding claims, wherein the division element (7) and the first element (10) are static elements, and the second element (11) is a dynamic element that move between
- an open position providing a distance between the first sealing surface (13) and the second sealing surface (14)
and a
- closing position towards the first element (10) providing a seal between the first element (10) and the second element (11).

11. A seal according to claim 10, further comprising one or more resilient members, such as a spring (22), which biases the second element (11) towards its opening position, so that the second element (11) being in an opening position unless a force is applied to the second element (11) to move it towards its closing position.

12. A seal according to any of the preceding claim, wherein the second element (11) being stationary and not rotating with the shaft (1) when the second element (11) is in its open position, where a distance between the first sealing surface (13) and the second sealing surface (14) is present, and the first element (10) is rotating with the shaft.

13. A seal according to any of the preceding claims, wherein the second element (11) is slideable arranged on the shaft (1) by comprising a cylindrical bore (12) through which the shaft extends (1), the diameter of the cylindrical bore (12) is preferably larger than the external dimension(s) of the shaft (1) to provide a clearance in between the bore (12) and the shaft (1).

14. A seal according to any of the preceding claims, wherein an actuator (17) is arranged to during non-rotation of the shaft (1) slide the second element (11) upwardly along the shaft (1) to a closing position, where a sealing between the first element (10) and the second element (11) is provided, and downwardly during rotation of the shaft (1) .

15. A fuel tank comprising a seal according to any of the preceding claims.

## Patentansprüche

1. Dichtung zum Abdichten einer Drehwelle (1), die innerhalb eines röhrenförmigen Elements (3), wie etwa einem Caisson zum Aufnehmen einer Pumpe in einem Behälter, verläuft, wobei die Dichtung Folgendes umfasst:
- ein rohrförmiges Element (3),
- ein Teilungselement (7), das das Innere des rohrförmigen Elements (3) in einen oberen Abschnitt (8) und einen unteren Abschnitt (9) teilt,
- eine Welle (1), die von einer Position in dem oberen Abschnitt (8) des rohrförmigen Elements (3) durch eine Durchgangsöffnung (15) in dem Teilungselement (7) und in den unteren Abschnitt (9) verläuft;
- ein erstes Element (10), das abdichtend an einer festen Position an der Welle (1) in dem oberen Abschnitt (8) angeordnet ist und eine erste abdichtende Fläche (13) aufweist, die die Welle (1) umgibt und in Richtung des inneren Teilungselements (7) zeigt,
- ein zweites Element (11), das verschieblich an der Welle (1) unter dem ersten Element (10) angeordnet ist, wobei das zweite Element eine zweite abdichtende Fläche (14) aufweist, die in Richtung der ersten abdichtenden Fläche (13) zeigt, wobei das zweite Element einen Abschnitt aufweist, der durch die Durchgangsöffnung (15) verläuft, und ein Dichtungselement (16) zwischen dem Abschnitt und der Durchgangsöffnung (15) bereitgestellt ist,
- ein Betätigungselement zum Verschieben des zweiten Elements (11) entlang der Welle (1),
**dadurch gekennzeichnet, dass** das Betätigungselement ein elektromagnetisches, pneumatisches und/oder hydraulisches Betätigungselement ist, das dazu angeordnet ist, das zweite Element entlang der Welle (1) zu verschieben.

2. Dichtung nach Anspruch 1, ferner umfassend ein Dichtungselement (18), das zwischen der ersten und der zweiten abdichtenden Fläche angeordnet ist.

3. Dichtung nach Anspruch 1 oder 2, wobei ein Gehäuse (19) in dem oberen Abschnitt (8) angeordnet ist,
- wobei das Gehäuse (19) den Abschnitt des zweiten Elements (11), der über dem Teilungselement (7) und über der ersten abdichtenden Fläche (13) verläuft, umschließt, wodurch zumindest ein unterer Abschnitt des ersten Elements (10) umschlossen wird,
- wobei das Gehäuse an einem Ende abdichtend an dem Teilungselement (7) angeordnet ist und an einem gegenüberliegenden Ende eine Öffnung (21) umfasst, durch die die Welle (1) verläuft.

4. Dichtung nach einem der vorhergehenden Ansprüche, wobei das zweite Element (11) verschieblich an der Welle angeordnet ist, indem es eine zylindrische Bohrung (12) umfasst, durch die die Welle (1) verläuft, wobei der Durchmesser der zylindrischen Bohrung größer als die Außenabmessung(en) der Welle ist, um einen Abstand zwischen der Bohrung (12) und der Welle (1) bereitzustellen.

5. Dichtung nach einem der Ansprüche 3-4, wobei das Gehäuse einen Rand (26) umfasst, der in die Durchgangsöffnung (15) verläuft, und ein Dichtungselement (16), das zwischen dem Abschnitt des zweiten Elements (11), der in die Durchgangsöffnung (15) verläuft, und der Durchgangsöffnung (15) bereitgestellt ist, zwischen dem Rand (26) und dem Abschnitt des zweiten Elements, der in die Durchgangsöffnung (15) verläuft, angeordnet ist.

6. Dichtung nach einem der vorhergehenden Ansprüche, ferner umfassend eine Feder (22), die dazu angeordnet ist, die zweiten Elemente (11) in Richtung des Teilungselements (7) vorzuspannen.

7. Dichtung nach Anspruch 6, wobei das Vorspannen des zweiten Elements (11) in Richtung des Teilungselements (7) ein Abstand zwischen einer ersten abdichtenden Fläche (13) und einer zweiten abdichtenden Fläche (14) bereitstellt.

8. Dichtung nach einem der vorhergehenden Ansprüche 3-7, ferner umfassend einen Fluid- oder Gasanschluss (24), der durch das Gehäuse (19) und zu einer Position unter dem zweiten Element (11) und über dem Teilungselement (7) verläuft.

9. Dichtung nach einem der vorhergehenden Ansprüche, ferner umfassend ein Auslassrohr (27), das unter dem zweiten Element (11) angeordnet ist und mit dem Inneren des rohrförmigen Elements in Fluidkommunikation steht, wodurch es dem Fluid ermöglicht wird, durch das rohrförmige Element und nach außen durch das Auslassrohr (27) zu strömen.

10. Dichtung nach einem der vorhergehenden Ansprüche, wobei das Teilungselement (7) und das erste Element (10) statische Elemente sind und das zweite Element (11) ein dynamisches Element ist, das sich zwischen Folgenden bewegt:
- einer offenen Position, die einen Abstand zwischen der ersten abdichtenden Fläche (13) und der zweiten abdichtenden Fläche (14) bereitstellt,
und einer
- Schließposition in Richtung des ersten Elements (10), die eine Dichtung zwischen dem ersten Element (10) und dem zweiten Element (11) bereitstellt.

11. Dichtung nach Anspruch 10, ferner umfassend ein oder mehrere elastische Elemente, wie etwa eine Feder (22), die das zweite Element (11) in Richtung seiner Öffnungsposition vorspannt, sodass sich das zweite Element (11) in einer Öffnungsposition befindet, außer es wird auf das zweite Element (11) eine Kraft angewendet, um es in Richtung seiner Schließposition zu bewegen.

12. Dichtung nach einem der vorhergehenden Ansprüche, wobei das zweite Element (11) stationär ist und sich nicht mit der Welle (1) dreht, wenn sich das zweite Element (11) in seiner offenen Position befindet, wobei ein Abstand zwischen der ersten abdichtenden Fläche (13) und der zweiten abdichtenden Fläche (14) vorhanden ist, und sich das erste Element (10) mit der Welle dreht.

13. Dichtung nach einem der vorhergehenden Ansprüche, wobei das zweite Element (11) verschieblich an der Welle (1) angeordnet ist, indem es eine zylindrische Bohrung (12) umfasst, durch die die Welle (1) verläuft, wobei der Durchmesser der zylindrischen Bohrung (12) bevorzugt größer als die Außenabmessung(en) der Welle (1) ist, um einen Abstand zwischen der Bohrung (12) und der Welle (1) bereitzustellen.

14. Dichtung nach einem der vorhergehenden Ansprüche, wobei ein Betätigungselement (17) dazu angeordnet ist, während der Nichtdrehung der Welle (1) das zweite Element (11) entlang der Welle (1) nach oben zu einer Schließposition zu verschieben, wobei eine Abdichtung zwischen dem ersten Element (10) und dem zweiten Element (11) bereitgestellt wird, und während der Drehung der Welle (1) nach unten zu verschieben.

15. Kraftstofftank, umfassend eine Dichtung nach einem der vorhergehenden Ansprüche.

## Revendications

1. Joint d'étanchéité destiné à assurer l'étanchéité d'un arbre rotatif (1) s'étendant à l'intérieur d'un élément tubulaire (3), tel que dans une caisse pour loger une pompe dans un réservoir, le joint d'étanchéité comprenant
- un élément tubulaire (3),
- un élément de division (7) divisant l'intérieur de l'élément tubulaire (3) en une section supérieure (8) et une section inférieure (9),
- un arbre (1) s'étendant à partir d'une position dans la section supérieure (8) de l'élément tubulaire (3) à travers une ouverture traversante (15) dans l'élément de division (7) et dans la section inférieure (9) ;
- un premier élément (10) agencé de manière étanche dans une position fixe sur l'arbre (1) dans la section supérieure (8) et possédant une première surface d'étanchéité (13) entourant l'arbre (1) et faisant face à l'élément de division interne (7),
- un second élément (11) agencé coulissant sur l'arbre (1) sous le premier élément (10), le second élément possédant une seconde surface d'étanchéité (14) faisant face à la première surface d'étanchéité (13), le second élément possédant une section s'étendant à travers l'ouverture traversante (15) et un élément d'étanchéité (16) étant disposé entre ladite section et l'ouverture traversante (15),
- un actionneur destiné à faire coulisser le second élément (11) le long de l'arbre (1),
**caractérisé en ce que** ledit actionneur est un actionneur à solénoïde, pneumatique et/ou hydraulique agencé pour faire coulisser le second élément le long de l'arbre (1).

2. Joint d'étanchéité selon la revendication 1, comprenant en outre un élément d'étanchéité (18) agencé entre les première et seconde surfaces d'étanchéité.

3. Joint selon la revendication 1 ou 2, un carter (19) agencé dans la section supérieure (8),
- ledit carter (19) renfermant la section du second élément (11) s'étendant au-dessus de l'élément de division (7) et au-dessus de la première surface d'étanchéité (13) enfermant ainsi au moins une section inférieure du premier élément (10),
- ledit carter étant agencé de manière étanche au niveau d'une extrémité sur l'élément de division (7) et comprenant au niveau d'une extrémité opposée une ouverture (21) à travers laquelle l'arbre (1) s'étend.

4. Joint d'étanchéité selon l'une quelconque des revendications précédentes, ledit second élément (11) étant agencé coulissant sur l'arbre en comprenant un alésage cylindrique (12) à travers lequel l'arbre (1) s'étend, ledit diamètre dudit alésage cylindrique étant supérieur à la ou aux dimension(s) externe(s) de l'arbre pour fournir un jeu entre ledit alésage (12) et l'arbre (1).

5. Joint d'étanchéité selon l'une quelconque des revendications 3 à 4, ledit carter comprenant une jupe (26) s'étendant dans l'ouverture traversante (15) et un élément d'étanchéité (16) disposé entre la section du second élément (11) s'étendant dans l'ouverture traversante (15) et ladite ouverture traversante (15) étant agencée entre ladite jupe (26) et la section du second élément s'étendant dans l'ouverture traversante (15).

6. Joint d'étanchéité selon l'une quelconque des revendications précédentes, comprenant en outre un ressort (22) agencé pour solliciter les seconds éléments (11) vers l'élément de division (7).

7. Joint d'étanchéité selon la revendication 6, ladite sollicitation du second élément (11) vers l'élément de division (7) fournissant une distance entre une première surface d'étanchéité (13) et une seconde surface d'étanchéité (14).

8. Joint d'étanchéité selon l'une quelconque des revendications 3 à 7 précédentes, comprenant en outre un raccord de fluide ou de gaz (24) s'étendant à travers le carter (19) et jusqu'à une position au-dessous du second élément (11) et au-dessus de l'élément de division (7).

9. Joint d'étanchéité selon l'une quelconque des revendications précédentes, comprenant en outre un tube de sortie (27) agencé en dessous du second élément (11) et étant en communication fluidique avec l'intérieur de l'élément tubulaire, permettant ainsi au fluide de s'écouler à travers l'élément tubulaire et de sortir à travers le tube de sortie (27).

10. Joint d'étanchéité selon l'une quelconque des revendications précédentes, ledit élément de division (7) et ledit premier élément (10) étant des éléments statiques, et ledit second élément (11) étant un élément dynamique qui se déplace entre
- une position ouverte fournissant une distance entre la première surface d'étanchéité (13) et la seconde surface d'étanchéité (14)
et une
- position de fermeture vers le premier élément (10) fournissant un joint d'étanchéité entre le premier élément (10) et le second élément (11).

11. Joint d'étanchéité selon la revendication 10, comprenant en outre un ou plusieurs éléments élastiques, tels qu'un ressort (22), qui sollicite le second élément (11) vers sa position d'ouverture, afin que le second élément (11) soit dans une position d'ouverture sauf si une force est appliquée au second élément (11) pour le déplacer vers sa position de fermeture.

12. Joint d'étanchéité selon l'une quelconque des revendications précédentes, ledit second élément (11) étant fixe et ne tournant pas avec l'arbre (1) lorsque le second élément (11) est dans sa position ouverte, une distance entre la première surface d'étanchéité (13) et la seconde surface d'étanchéité (14) étant présente, et ledit premier élément (10) tournant avec l'arbre.

13. Joint d'étanchéité selon l'une quelconque des revendications précédentes, ledit second élément (11) étant agencé coulissant sur l'arbre (1) en comprenant un alésage cylindrique (12) à travers lequel l'arbre s'étend (1), ledit diamètre de l'alésage cylindrique (12) étant de préférence supérieure à la ou aux dimension(s) externe(s) de l'arbre (1) pour fournir un jeu entre l'alésage (12) et l'arbre (1).

14. Joint d'étanchéité selon l'une quelconque des revendications précédentes, un actionneur (17) étant agencé pour faire coulisser, durant la non-rotation de l'arbre (1), le second élément (11) vers le haut le long de l'arbre (1) jusqu'à une position de fermeture, où un joint d'étanchéité entre le premier élément (10) et le second élément (11) est disposé, et vers le bas durant la rotation de l'arbre (1).

15. Cuve de carburant comprenant un joint d'étanchéité selon l'une quelconque des revendications précédentes.
